# EUROPÄISCHE PATENTSCHRIFT

(11) **EP 0 764 511 B1**
(45) Veröffentlichungstag und Bekanntmachung des Hinweises auf die Patenterteilung: **01.08.2001**
(21) Anmeldenummer: 96114050.6
(22) Anmeldetag: 03.09.1996
(51) Int. Cl.: B29C 45/24, B01F 15/00, B29B 7/76

(54) **Vorrichtung zum Austragen eines aus chemisch reaktiven Kunststoffkomponenten gebildeten Kunststoffgemisches**
Device for removing a reactive resin mixture
Appareil pour l'élimination d'un mélange de résines réactives

(30) Priorität: 23.09.1995 DE 19535474
(43) Veröffentlichungstag der Anmeldung: 26.03.1997
(73) Patentinhaber: Krauss-Maffei Kunststofftechnik GmbH, 80997 München (DE)
(72) Erfinder: Renkl, Josef, 85229 Markt-Indersdorf (DE); Stippl, Ludwig, 85259 Wiedenzhausen (DE)
(74) Vertreter: Rucker, Bernd

(56) Entgegenhaltungen:
- EP-A- 0 101 988
- US-A- 4 073 664
- US-A- 4 204 977
- US-A- 4 583 691
- US-A- 5 226 565

## Beschreibung

Die Erfindung betrifft eine Vorrichtung der im Oberbegriff des Patentanspruchs 1 angegebenen Art.

Bei einer Vorrichtung zur Erzeugung eines Gemisches aus chemisch reaktiven Kunststoffkomponenten werden die Kunststoffkomponenten im Gegenstrom in eine zylindrische Mischkammer injiziert, wobei das dadurch gebildete Reaktionsgemisch durch einen reversierbar in der Mischkammer geführten Steuerungs- bzw. Reinigungskolben aus der zylindrischen Mischkammer ausgetrieben wird. Das Reaktionsgemisch kann dabei direkt aus der Mischkammer in eine Form gefördert werden, es kann jedoch auch noch über eine der Mischkammer nachgeordnete Beruhigungskammer geleitet werden, in der ebenfalls ein Reinigungskolben reversierbar geführt ist und mit dem das Reaktionsgemisch aus der Beruhigungskammer ausgestoßen wird. Bei Beendigung des Ausstoßvorganges liegt das Kolbenende des Reinigungskolbens bündig in einer Ebene mit der Austrittsöffnung der Beruhigungskammer.

Für den Fall, daß Vorrichtungen verwendet werden, bei denen nur eine Mischkammer vorliegt oder bei denen der Mischkammer eine Beruhigungskammer nachgeordnet ist, stellen die Mischkammer oder die Beruhigungskammer Auslaufkammern dar, bei denen nach dem Austreiben der restlichen Gemischmenge durch den Reinigungskolben stets eine tropfenartige Restmenge verbleibt, die entfernt werden muß, da die Restmenge ansonsten in kurzer Zeit ausreagieren würde und mit den Restmengen der nachfolgenden Spritzzyklen die Austrittsöffnung der Auslaufkammer derart zusetzen würde, daß die Form nicht mehr ordnungsgemäß mit Reaktionsgemisch gefüllt werden könnte.

Es ist bekannt, die Austrittsöffnung mittels Drähten, Klingen, rotierenden und feststehenden Bürsten, mit Tüchern oder mit unter Druck stehendem Spülmedium zu reinigen.

Aus der US-A 5 226 565 ist eine Reinigungsvorrichtung bekannt, bei der die Austrittsöffnung mit einem unter Druck stehenden Spülmedium beaufschlagt wird, wodurch die an der Austrittsöffnung klebenden Teilmengen an reaktivem Kunststoff entfernt werden.
Aufgabe der Erfindung ist es, eine Reinigungsvorrichtung der genannten Art so zu verbessern, dass eine Bindung und ein definierter Abtransport der abgelösten Bestandteile aus reaktivem Kunststoff mit dem Spülmedium erfolgt und dass sichergestellt ist, dass das Spülmedium nach Aufbereitung bzw. Trennung von den Bestandteilen aus reaktivem Kunststoff im Kreislauf wiederverwendet werden kann, wobei gewährleistet sein soll, dass kein Spülmedium und keine Bestandteile aus reaktivem Kunststoff unkontrolliert in den Arbeitsbereich der Reaktionsgießmaschine gelangen.

Es ergibt sich dabei der Vorteil, dass das Aufschäumen der vom Spülmedium Wasser abgelösten Bestandteile aus reaktivem Kunststoff unterbrochen oder weitgehend vermindert werden kann, so dass das Abfallvolumen reduziert werden kann.

Bei Verwendung von aufgeheiztem Wasser oder Wasserdampf als Spülmedium ergibt sich der Vorteil, dass die chemische Reaktion der abgelösten Bestandteile aus reaktivem Kunststoff beschleunigt werden kann, so dass diese Bestandteile in ausgehärteter oder hochviskoser Form in den Filter gelangen und aus diesem leicht entfernt werden können.

Weitere vorteilhafte Ausgestaltungen sind in den Unteransprüchen angegeben.

Im folgenden wird die Erfindung unter Hinweis auf die Zeichnung anhand eines Ausführungsbeispiels näher erläutert. Es zeigt:
- Fig. 1: das Endstück einer im Spülflansch positionierten Auslaufkammer mit Filter, Sammelbehälter, Pumpe und Kreislaufleitung,
- Fig. 2: den Spülflansch nach Fig. 1 in der Draufsicht mit einer Drehvorrichtung und
- Fig. 3: den Schnitt durch den Spülflansch nach Fig. 1 im vergrößerten Maßstab.

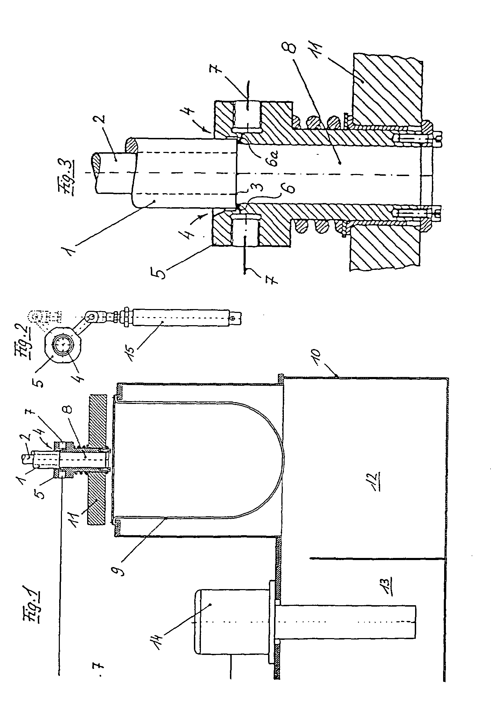

Die in Fig. 1 dargestellte Vorrichtung und die Detaildarstellung nach Fig. 3 zeigen das Enstück der Auslaufkammer 1 eines Polyurethan-Mischkopfes in dem chemisch reaktive Kunststoffkomponenten gemischt werden und mit dem das Reaktionsgemisch in die Spritzform (nicht dargestellt) gefördert wird. Am Ende des Füllzyklus wird die in der Auslaufkammer 1 befindliche Gemischmenge durch den reversierbar in der Auslaufkammer 1 geführten Reinigungskolben 2 ausgestoßen. Das Endstück des Reinigungskolbens 2 schließt dann bündig mit der Austrittsöffnung 3 der Auslaufkammer 1 ab.

Das Endstück der Auslaufkammer 1 ist in der Ringöffnung 4 eines Spülflansches 5 positioniert, in die in der Ebene der Austrittsöffnung 3 Sprühdüsen 6 führen, die an eine oder mehrere Zuführleitungen 7 für Spülmedium angeschlossen sind.

An die Ringöffnung 4 des Spülflansches 5 schließt sich ein Auslaufrohr 8 an, das in einen Filterbeutel 9 mündet, der in einem Sammelbehälter 10 befestigt ist. Mittels einer am Auslaufrohr 8 befestigten Verschlußscheibe 11 ist der Filterbeutel 9 verschließbar, wobei die Verschlußscheibe 11 durch eine am Spülflansch 5 abgestützte Druckfeder abdichtend auf den Rand des Filterbeutels 9 gedrückt wird.

Der Sammelbehälter 10 ist durch ein Überlaufwehr in eine Absetzkammer 12 und in eine Pumpenkammer 13 unterteilt, in der sich eine Umwälzpumpe 14 befindet, mit der über die Zuführleitungen 7 Spülmedium zu den Sprühdüsen 6 des Spülflansches 5 förderbar ist. Vom Spülflansch 5 gelangt das Spülmedium nach Abtrennung der Kunststoff-Restmengen im Filterbeutel 9 in den Sammelbehälter 10 und wird von dort im Kreislauf über die Umwälzpumpe 14 und die Zuführleitungen 7 wieder dem Spülflansch zugeführt.

Die Fig. 2 zeigt die Draufsicht auf den Spülflansch 5, der mit einem hydraulischen Schwenkzylinder 15 gekoppelt ist. Mit diesem Schwenkzylinder 15 kann der Spülflansch 5 um das Endstück der Auslaufkammer 1 gedreht werden, wodurch die Austrittsöffnung 3 durch die mit der Drehung geschwenkten Sprühdüsen 6 vollständig mit Spülmittel beaufschlagt und von Schaumresten gereinigt werden kann. Die Fig. 2 zeigt die Ausgangsstellung des Schwenkzylinders 15 sowie in unterbrochenen Linien die Endstellung des Schwenkzylinders.

Im Betrieb wird der Mischkopf nach dem Befüllen der Form bzw. nach jedem Schuß mittels eines Industrieroboters oder von Hand mit dem Ende der Auslaufkammer 1 in den Spülflansch 5 positioniert. In dieser Betriebsphase ist der Reinigungskolben 2 in der vordersten Stellung, in der dieser das Reaktionsgemisch vollständig aus der Auslaufkammer 1 ausgetrieben hat und in der die Kopffläche des Reinigungskolbens 2 in der Austrittsöffnung 3 liegt und mit der ringförmigen Endfläche der Auslaufkammer 1 eine Kreisfläche bildet. Auf dieser Kreisfläche nach jedem Schuß verbleibende tropfenartige Restmengen vom Reaktionsgemisch werden über die Sprühdüsen 6 mit unter Druck stehendem Spülmedium beaufschlagt und vollständig entfernt. Das mit den Restmengen an Reaktionsgemisch befrachtete Spülmedium wird über das an den Spülflansch 5 anschließende Auslaufrohr 8 in den Filterbeutel 9 geleitet, wo es von den Gemischbestandteilen getrennt wird und anschließend aus dem Sammelbehälter 10 im Kreislauf wieder dem Spülflansch 5 zugeführt wird.

Nach der Beaufschlagung und vollständigen Reinigung der Endfläche der Auslaufkammer 1 mit Spülmedium wird diese mit unter Druck stehendem Trocknungsgas beaufschlagt. Das Trocknungsgas kann dabei über gesonderte Sprühdüsen 6a oder, nach entsprechender Leitungsumschaltung (nicht dargestellt), über die Sprühdüsen 6 für das Spülmittel eingebracht werden, wodurch die Endfläche der Auslaufkammer 1 getrocknet wird und somit der Mischkopf in vollständig gereinigtem Zustand für den nächsten Spritzzyklus vorbereitet ist. Anstelle der Beaufschlagung mit Druckluft kann die Endfläche der Auslaufkammer 1 auch abgesaugt werden.

## Patentansprüche

1. Vorrichtung zum Austragen eines aus chemisch reaktiven Kunststoffkomponenten gebildeten Kunststoffgemisches in Spritzzyklen aus der Auslaufkammer (1) eines Mischkopfes, in der ein Reinigungskolben (2) reversierbar hin und her bewegbar ist und deren Austrittsöffnung (3) in die Ringöffnung (4) eines Spülflansches (5) positionierbar ist, in dem in der Ebene der Austrittsöffnung (3) eine oder mehrere, im wesentlichen radial nach innengerichtete Spritzdüsen (6) angeordnet sind, die jeweils an eine oder mehrere Zuführleitungen (7) für unter Druck stehendes Spülmedium angeschlossen sind, **dadurch gekennzeichnet**, dass dem Spülflansch (5) ein Filter (9) und ein Sammelbehälter (10) für Spülmedien nachgeordnet sind, aus dem das aus Wasser bestehende Spülmedium mittels einer Pumpe (14) über eine Kreislaufleitung zu den Zuführleitungen (7) für die Spühdüsen (6) förderbar ist.

2. Vorrichtung nach Anspruch 1, **dadurch gekennzeichnet**, dass der Spülflansch (5) mit einer Drehvorrichtung gekoppelt ist.

3. Vorrichtung nach Anspruch 1 oder 2, **dadurch gekennzeichnet**, dass sich an die Ringöffnung (4) des Spülflansches (5) ein Auslaufrohr (8) anschließt.

4. Vorrichtung nach einem der Ansprüche 1 bis 3, **dadurch gekennzeichnet**, dass der Sammelbehälter (10) eine Absetzkammer (12) aufweist, die von einer Pumpenkammer (13) durch ein Überlaufwehr getrennt ist.

5. Vorrichtung nach einem der Ansprüche 1 bis 4, **dadurch gekennzeichnet**, dass das Spülmedium Heißwasser ist.

6. Vorrichtung nach einem der Ansprüche 1 bis 4, **dadurch gekennzeichnet,** dass das Spülmedium Wasserdampf ist.

7. Vorrichtung nach einem der Ansprüche 1 bis 6, **dadurch gekennzeichnet**, dass die Austrittsöffnung (3) der Auslaufkammer (1) mit einer Absaugvorrichtung beaufschlagbar ist.

8. Vorrichtung nach einem der Ansprüche 1 bis 7, **dadurch gekennzeichnet**, dass die Austrittsöffnung (3) der Auslaufkammer (1) mittels eines Industrie-Roboters in die Ringöffnung (4) des Spülflansches (5) positionierbar ist.

9. Vorrichtung nach einem der Ansprüche 1 bis 8, **dadurch gekennzeichnet**, dass in der Ebene der Austrittsöffnung (3) eine oder mehrere, im wesentlichen radial nach innen gerichtete Sprühdüsen (6a) angeordnet sind, die jeweils an eine oder mehrere Zuführleitungen für unter Druck stehendes Trocknungsgas angeschlossen sind.

10. Vorrichtung nach Anspruch 9, **dadurch gekennzeichnet**, dass das Trocknungsgas über die Sprühdüsen (6) für das Spülmedium geleitet wird.

11. Vorrichtung nach einem der Ansprüche 1 bis 10, **dadurch gekennzeichnet**, dass der Filter die Form eines Filterbeutels (9) aufweist, der durch eine am Auslaufrohr (8) befestigte und gegenüber diesem federnd abgestützte Verschlußscheibe (11) verschließbar ist.

## Claims

1. Device for removing a plastics material mixture formed from chemically reactive plastics material components in moulding cycles from the discharge chamber (1) of a mixing head in which a cleaning plunger (2) can shuttle back and forth and the discharge aperture (3) of which can be positioned in the annular aperture (4) of a rinsing flange (5) in which, in the plane of the discharge aperture (3), one or more injection nozzles (6), directed substantially radially inwards, are arranged which, in each case, are connected to one or more feed lines (7) for a rinsing medium under pressure, characterised in that a filter (9) and a collecting vessel (10) for rinsing media are arranged downstream of the rinsing flange (5), from which collecting vessel (10) the rinsing medium consisting of water can be conveyed for the injection nozzles (6) via a circulation line to the feed lines (7).

2. Device according to claim 1, characterised in that the rinsing flange (5) is coupled to a rotary device.

3. Device according to claim 1 or 2, characterised in that a discharge pipe (8) is connected to the annular aperture (4) of the rinsing flange (5).

4. Device according to any one of claims 1 to 3, characterised in that the collecting vessel (10) has a settling chamber (12), which is separated from a pump chamber (13) by an overflow weir.

5. Device according to any one of claims 1 to 4, characterised in that the rinsing medium is hot water.

6. Device according to any one of claims 1 to 4, characterised in that the rinsing medium is steam.

7. Device according to any one of claims 1 to 6, characterised in that the discharge aperture (3) of the discharge chamber (1) can be loaded with a suction device.

8. Device according to any one of claims 1 to 7, characterised in that the discharge opening (3) of the discharge chamber (1) can be positioned by means of an industrial robot into the annular aperture (4) of the rinsing flange (5).

9. Device according to any one of claims 1 to 8, characterised in that, in the plane of the discharge aperture (3), one or more injection nozzles (6a), directed substantially radially inwards, are arranged which, in each case, are connected to one or more feed lines for drying gas under pressure.

10. Device according to claim 9, characterised in that the drying gas is guided via the injection nozzles (6) for the rinsing medium.

11. Device according to any one of claims 1 to 10, characterised in that the filter has the form of a filter bag (9) which can be closed by a closure disc (11) fastened to the discharge pipe (8) and resiliently supported with respect thereto.

## Revendications

1. Dispositif destiné à évacuer un mélange de produits synthétiques formé à partir de composants en matière plastique chimiquement réactifs, lors de cycles de pulvérisation à partir de la chambre de décharge (1) d'une tête mélangeuse, dans laquelle peut être déplacé, dans un mouvement de va et vient et de manière réversible, un piston de nettoyage (2), et dont l'orifice de sortie (3) peut être positionné dans l'ouverture annulaire (4) d'une collerette de rinçage (5), dans lequel, au niveau de l'orifice de sortie (3), sont disposées une ou plusieurs buses à injection (6) dirigées pour l'essentiel radialement vers l'intérieur, qui sont respectivement reliées à un ou plusieurs conduits d'amenée (7) pour le milieu de rinçage sous pression, caractérisé en ce qu'un filtre (9) et un récipient collecteur (10) destinés aux milieux de rinçage sont disposés à la suite de la collerette de rinçage (5), à partir de laquelle le milieu de rinçage composé d'eau peut être acheminé jusqu'aux conduits d'amenée (7) destinés aux tuyères (6a) en passant par un circuit fermé, au moyen d'une pompe (14).

2. Dispositif selon la revendication 1, caractérisé en ce que la collerette de rinçage (5) est couplée à un dispositif de rotation.

3. Dispositif selon la revendication 1 ou la revendication 2, caractérisé en ce qu'un tuyau d'évacuation (8) est relié à l'ouverture annulaire (4) de la collerette de rinçage (5).

4. Dispositif selon l'une quelconque des revendications 1 à 3, caractérisé en ce que le récipient collecteur (10) présente une chambre de dépôt (12), qui est séparée d'une chambre de pompage (13) par un déversoir de trop-plein.

5. Dispositif selon l'une quelconque des revendications 1 à 4, caractérisé en ce que le milieu de rinçage est de l'eau chaude.

6. Dispositif selon l'une quelconque des revendications 1 à 4, caractérisé en ce que le milieu de rinçage est de la vapeur d'eau.

7. Dispositif selon l'une quelconque des revendications 1 à 6, caractérisé en ce que l'orifice de sortie (3) de la chambre de décharge (1) peut être alimenté avec un dispositif d'aspiration.

8. Dispositif selon l'une quelconque des revendications 1 à 7, caractérisé en ce que l'orifice de sortie (3) de la chambre de décharge (1) peut être positionné dans l'ouverture annulaire (4) de la collerette de rinçage (5) au moyen d'un robot industriel.

9. Dispositif selon l'une quelconque des revendications 1 à 8, caractérisé en ce que, au niveau de l'orifice de sortie (3), sont disposées une ou plusieurs tuyères (6a) dirigées pour l'essentiel radialement vers l'intérieur, lesquelles sont respectivement reliées à un ou plusieurs conduits d'amenée destinés au gaz de séchage sous pression.

10. Dispositif selon la revendication 9, caractérisé en ce que le gaz de séchage est acheminé par l'intermédiaire des buses à injection (6) pour le milieu de rinçage.

11. Dispositif selon l'une quelconque des revendications 1 à 10, caractérisé en ce que le filtre a la forme d'une poche de filtre (9) pouvant être fermée par une plaquette de fermeture (11) fixée au tuyau d'évacuation (8) et s'appuyant contre ce dernier de manière élastique.
